# EUROPEAN PATENT SPECIFICATION

(11) **EP 0 806 232 B1**
(45) Date of publication and mention of the grant of the patent: **01.09.1999**
(21) Application number: 97830026.7
(22) Date of filing: 29.01.1997
(51) Int. Cl.: B01D 46/04

(54) **A compressed-air filter-cleaning device**
Druckluft-Filterreinigungsvorrichtung
Dispositif pour la purification de filtre à air comprimé

(30) Priority: 07.05.1996 IT MO960055
(43) Date of publication of application: 12.11.1997
(73) Proprietor: WAM S.p.A., 41030 Ponte Motta Cavezzo (Modena) (IT)
(72) Inventor: Ramponi, Sandro, 44044 Porotto di Ferrara (FE) (IT)
(74) Representative: Gotra, Stefano

(56) References cited:
- DE-A- 3 638 648
- DE-A- 4 308 285

## Description

The invention relates to a device for cleaning filters using compressed air, especially for air filters, which is advantageously usable in dusty environments. Usually each filter is provided with a plurality of filtering elements, in general of the cartridge type, mounted parallel one to another on a common support structure. In general each filter differs from another both in number and in arrangement of its filtering elements. At present such filters are cleaned by using a compressed-air device which is fixed to the support structure of the various filtering elements and which on command directs air counter-current inside each filter element of the filter.

DE 36 38 648 discloses a compressed-air filter cleaning device comprising an integrally formed distributor fixed to a filter structure. The distributor has a plurality of outlet connections destined during device operation to connect with a plurality of filtering elements to be cleaned and at least one inlet connection destined to be connected to a compressed air source. The filtering elements are flexible filter bags retaining dust from gas flowing inwards through the bag walls. The filter bags are periodically cleaned by counterflowing blasts of scouring air from above. These blasts, which remove suspended dust from filter bags, derive from outlet connections comprising holes positioned, in a pattern corresponding to bag locations in the partition, at the ends of radical arms extending from the central chamber in a hollow distributor body. Distributor body and arms are formed as simple casting, and are supplied with compressed air stored in an upper transverse cylinder. Air from the cylinder reaches the distributor via electro-valves at the heads of tubular feeders.

These known devices, however, have to be specially designed for each type of filter and are not interchangeable, being lacking in flexibility and unadaptable to various filters when the number and/or arrangement of the filtering elements are changed. The main aim of the present invention is to obviate the drawbacks in the prior art by providing a cleaning device for filters equipped with a multiplicity of filtering elements, which is constructionally simple and economical and practically universally utilisable, that is, suitable for filters having any number of filtering elements, positioned in any arrangement.

An advantage of the invention is its simplicity and practicality.

A further advantage of the invention is that it provides a device which can be assembled and installed rapidly and simply.

These aims and advantages and others besides are all achieved by the cleaning device of the invention, as it is characterised in the claims that follow.

Further characteristics and advantages of the present invention will better emerge from the detailed description that follows of a preferred but non-exclusive embodiment of the invention, illustrated purely by way of non-limiting example in the accompanying figures of the drawings, in which:
figure 1 is a section in vertical elevation of the device of the invention, mounted on an external structure 3 and situated in proximity of a filtering element 2 to be cleaned;
figure 2 is a partial section of a detail of the device, according to a section plane rotated by 90° with respect to figure 1, with some parts removed better to evidence others.

With reference to the abovementioned figures, 1 denotes in its entirety a compressed-air cleaning device for filters, provided with a plurality of filtering elements mounted on a common support structure. 2 denotes one of these filtering elements, circular and of the cartridge type, with a vertical axis (represented only partially). 3 denotes a known-type sheet metal support structure (partially illustrated in the figure) which is external to the device 1, which bears both the device 1 and the various filtering elements 2, which are parallel one to another and located more or less at a same height. In the figures only one filtering element 2 is illustrated.

The device comprises a base 4, made of a plastic material (for example, nylon), axially symmetrical and fixed to the external support structure 3 by means of, for example, a bolt 5.

The device further comprises a nucleus 6, preferably made of nylon, which is axially symmetrical, coaxial to the base 4, and made in two pieces, a first, lower piece 7 of which exhibits an internal cylindrical surface 60 which marries with an external cylindrical surface 40 of the base 4. The nucleus 6 is rotatably and slidably coupled (in an axial direction) to the base 4. The first piece 7 exhibits a lateral wall 8, projecting superiorly in an axial direction, of annular shape, being relatively slim and affording a plurality of peripheral holes 9 (the number and arrangement of the holes 9 depends on the characteristics ofthe filter to be cleaned, as will be better explained hereinbelow). The holes 9 are in fact through-holes, arranged along a circumference at predetermined and distanced angular intervals.

A second, upper piece 10 of the nucleus is fixed to the first piece 7 by means, for example, of three bolts 11 arranged circumferentially at 120° (in the figures only one bolt 11 is schematically illustrated). The second piece 10 is of a circular plate-shape with a central through-hole 12 and an annular recess 19 situated on the lower surface of the second piece 10, which recess 19 will house the upper end of the annular lateral wall 8. The lower surface of the second piece 10 and the lateral wall 8 describe a cavity 13, internal of the nucleus 6, to which are connected an inlet 14 and a plurality of outlet connections 15 destined to be connected up to a source of compressed air (of known type and not illustrated) and a plurality of filtering elements 2 of the filter to be cleaned. The inlet connection 14 of the compressed air is constituted by a conduit 16 which is sealedly fitted at one of its ends in the central hole 12 of the second piece 10 and which opens into the internal cavity 13 of the nucleus 6. Each outlet connection 15, which is associated to a peripheral hole 9 of the first piece 7, comprises a nylon sleeve 17, coaxial to the respective hole 9. Each sleeve 17 is provided with a flanged base 24 which engages superiorly in the recess 19 of the second piece 10 and inferiorly in a recess 18 on the first piece 7. Each outlet connection 15 further comprises a conduit 20 for the emission of compressed air, which exhibits an open end which is connected solidly and removably to the sleeve 14, and an opposite closed end. At least one hole 25 is predisposed on the wall of the conduit for the exit of a jet of downwardly-directed compressed air inside the filtering element 2, enabling air to be blown in against the current. A plurality of aligned holes 25 can be predisposed on a conduit 20 (obviously longer than the one illustrated), each of which holes is associable to a respective filtering element 2 to be cleaned. This means that a plurality of filtering elements 2 arranged in a line can be cleaned using only one conduit 20. Furthermore, a Venturi tube (not illustrated) can be interpositioned between the compressed-air outlet hole 25 and the respective filtering element 2.

The outlet connections 15 form a system of horizontal radially-arranged connections, each of which is operatively associable to at least one filtering element 2 of the filter to be cleaned. The assembly of the various outlet connections 15 on the nucleus 6 is carried out by fitting the flanged bases 24 of each sleeve 17 (with relative conduit 20) in the recess 18 of the first lower piece 7 and then fixing the second piece 10 to the first by positioning the recess 19 in such a way with respect to the flanged bases 24 as to block the sleeves 17 in position.

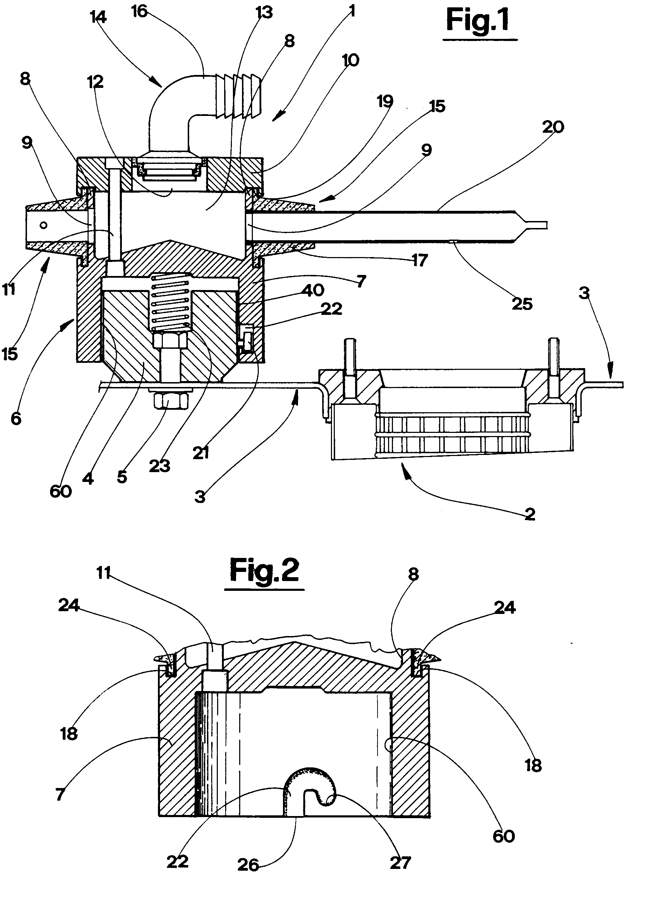

The device 1 is further provided with means for rapidly engaging and disengaging the nucleus 6 from the base 4, comprising at least one pin 21 solidly associated to the base 4 and radially projecting therefrom. In the example three pins 21 are provided, angularly equally distanced by 120°. Each pin 21 engages in a relative upturned-U-shaped channel 22 (see figure 2), made on the internal surface 60 of the nucleus 6. The channel 22 exhibits an open end 26 at the lower edge of the nucleus, through which the pin 21 can be inserted, and further exhibits a first tract developing in an axial direction, a short intermediate connecting tract developing in practically a circumferential direction, and a final blind and axial tract, terminating at one end at an endrun stop 27. A spring 23, predisposed between the base 4 and the nucleus 6, acts in such a way that when the device 1 is installed, the endrun stop 27 of each channel 22 presses against the respective pin 21. The pin-channel coupling enables the nucleus 6 to be axially inserted and disinserted from the base by means of an axially-directed pressure (antagonistically to the spring 23) and a subsequent slight rotation of the nucleus 6 itself.

The various components of the device 1, especially the base 4, the first piece 7 and the second piece 10 of the nucleus 6 are made apart and assembled thereafter. It is important that the lateral wall 8 of the nucleus 6, which in the example is part of the first piece 7 of the nucleus 6, be first made without the holes 9, which are bored later following well-known and simple techniques. The holes 9 must be situated in precise angular positions on the lateral wall 8, according to the number and arrangement of the multiplicity of the filtering elements 2 in the filter to be cleaned. Thus the device is extremely versatile and practically universal, and can be used on any filter provided with a plurality of filtering elements to be cleaned, whatever their number and arrangement, by means of a simple and rapid operation largely consisting in a series of holes being made in the lateral wall 8 at points which can be decided time by time. In use, once the holes 9 have been made, the two pieces of the nucleus 6 are assembled one to another in such a way that the outlet connections 15 stay gripped between the two pieces 7 and 10. Subsequently the nucleus 6 is engaged on the base 4 which is already mounted on the external structure 3. Obviously the base 4 must be positioned with respect to the various filtering elements 2 to be cleaned such that the conduits 20, when the device is working, present their outlet holes 25 exactly at the position of the filtering elements 2 to be cleaned. When the inlet connection 14 is connected to the compressed air source, compressed air is directed through the device and blown backwards, that is to say, in counter-current direction to the normal current direction of the air in the various filtering elements 2.

In a second embodiment, not illustrated, of the invention, the base bears at least one pin (preferably two diametrically opposite pins) while the internal surface of the nucleus exhibits a multiplicity of channels having an upturned-U shape, like the above-described channels 22, arranged circumferentially one close to another, so that with respect to the base fixed to the external filter structure the external nucleus bearing the outlet connections can selectively assume a plurality of preferred stable positions, angularly distanced one from another and selectable by rotating the nucleus about the base. The nucleus exhibits a plurality of outlet connections (for example, eight) arranged circumferentially in standard positions, preferably at a regular angular distance. During operation the nucleus is initially mounted on the base without being engaged thereupon (that is, without engaging the pin in a channel), so that the nucleus is rotatable with respect to the base. The nucleus is manually commanded to rotate on the base, causing the totality of the various spoke-arranged horizontal conduits to rotate on a horizontal plane overlying the filtering elements, up to reaching a configuration in which each filtering element mounted on the filter structure, or in any case the greatest possible number of filtering elements, corresponds to one of the outlet holes of compressed air situated on the horizontal conduits. It is at this point that the nucleus is engaged by a coupling between the pin and the channel which is closest to the chosen configuration. One advantage of this second embodiment is that the holes on the annular wall are not made subsequently, as in the previous embodiment, and in different positions according to the filter they are destined for, but are instead set in predetermined positions, the same for all cleaning devices. The adaptation of the cleaning device to the various filters is obtained by rotating the nucleus about the base up until the most suitable angular position of the nucleus is found.

## Claims

1. A compressed-air filter cleaning device, comprising:
a base (4) fixed to an external structure (3);
a plurality of outlet connections (15) destined during device operation to connect with a plurality of filtering elements (2) to be cleaned;
at least one inlet connection (14) destined to be connected with a compressed air source;
**characterised in that** it comprises
a nucleus (6), coupled to the base (4), provided with an annular-shaped lateral wall (8) describing at least partially an internal cavity (13) and on which said a plurality of outlet connections (15) are made, which outlet connections (15) are arranged radially in predetermined angular positions, said at least one inlet connection (14) leading from said internal cavity (13).

2. The device of claim 1, characterised in that holes (9) are made in said lateral wall (8) to each of which a respective outlet connection (15) can be associated.

3. The device of claim 1 or 2, characterised in that the nucleus (6) is made in two parts, respectively a first part (7) and a second part (10), which parts can be assembled together; one of which first and second parts (7, 10) exhibits said lateral wall (8).

4. The device of claim 3, characterised in that each outlet connection (15) is coaxial to a respective hole (9) and is gripped between the first and second pieces (7, 10) of the nucleus (6).

5. The device of claim 4, characterised in that each outlet connection (15) comprises a sleeve (17) exhibiting a flanged base (24) which engages in a recess (18) of a first piece (7) of the nucleus (6) and which also engages in a recess (19) of a second piece (10) of the nucleus (6).

6. The device of any one of the preceding claims, characterised in that the nucleus (6) is coupled to the base (4) in such a way that said nucleus (6) is axially slidable and rotatable with respect to said base (4) and can selectively assume, on command, a plurality of stable positions which are angularly distanced one from another.

7. The device of claim 6, characterised in that it comprises at least one pin (21) engageable in at least one upturned-U-shaped channel (22) having an open end (26) through which the pin (21) can be inserted and disengaged, and also having an opposite blind end (27) against which the pin (21) strikes by effect of an elastic element (23) operating in an axial direction between the base (4) and the nucleus (6), so that engagement and disengagement of the nucleus (6) is achieved by means of axially-directed pressure antagonistically with the elastic element (23) and a subsequent slight rotation of the nucleus (6).

8. The device of claim 7, characterised in that it comprises a plurality of said channels (22) which are circumferentially arranged.

9. The device of any one of the preceding claims, characterised in that each outlet connection (15) is associable to a conduit (20) having at least one outlet hole (25) for emission of a jet of compressed air which can be directed into a respective filtering element (2).

10. The device of claim 9, characterised in that said conduit (20) exhibits a plurality of aligned outlet holes (25), each of which is associable to a filtering element (2).

## Patentansprüche

1. Druckluft-Filterreinigungsvorrichtung, enthaltend:
- eine an einer äusseren Struktur (3) zu befestigenden Basis (4);
- eine Anzahl von Auslaßstutzen (15), dazu bestimmt, während des Betriebes der Vorrichtung an eine Anzahl von zu reinigenden Filterelementen (2) angeschlossen zu werden;
- Wenigstens einen Einlaßstutzen (14), dazu bestimmt, an eine Druckluftquelle angeschlossen zu werden.
**dadurch gekennzeichnet**, dass sie einen mit der Basis (4) verbundenen Kernkörper (6) enthält, versehen mit einer ringförmig ausgebildeten Seitenwand (8), welche wenigstens zum Teil einen inneren Hohlraum (13) beschreibt, und an welcher die genannte Anzahl von Auslaßstutzen (15) hergestellt werden kann, welche Auslaßstutzen (15) radial in festgelegten Winkelpositionen angeordnet sind, wobei der genannte wenigstens eine Einlaßstutzen (14) von dem genannten inneren Hohlraum (13) herführt.

2. Vorrichtung nach Patentanspruch 1, **dadurch gekennzeichnet**, dass Bohrungen (9) in die genannte Seitenwand (8) eingearbeitet sind, denen jeweils ein entsprechender Auslaßstutzen (15) zugeordnet werden kann.

3. Vorrichtung nach Patentanspruch 1 oder 2, **dadurch gekennzeichnet**, dass der Kernkörper (6) aus zwei Teilen hergestellt ist, und zwar einem ersten Teil (7) und einem zweiten Teil (10), welche Teile zusammengesetzt werden können, wobei einer der ersten und zweiten Teile (7, 10) die genannte Seitenwand (8) aufweist.

4. Vorrichtung nach Patentanspruch 3, **dadurch gekennzeichnet**, dass jeder Auslaßstutzen (15) koaxial zu einer jeweiligen Bohrung (9) verläuft und zwischen den ersten und zweiten Teilen (7, 10) des Kernkörpers (6) eingeklemmt ist.

5. Vorrichtung nach Patentanspruch 4, **dadurch gekennzeichnet**, dass jeder Auslaßstutzen (15) eine Muffe (17) enthält, die eine geflanschte Basis (24) aufweist, welche in eine Vertiefung (18) von einem ersten Teil (7) des Kernkörpers (6) und ebenso in eine Vertiefung (19) eines zweiten Teils (10) des Kernkörpers (6) greift.

6. Vorrichtung nach einem beliebigen der vorstehenden Patentansprüche, **dadurch gekennzeichnet**, dass der Kernkörper (6) auf solche Weise an die Basis (4) angeschlossen ist, dass der genannte Kernkörper (6) axial gleitbar und drehbar im Verhältnis zu der genannten Basis (4) ist und wahlweise auf einen Steuerbefehl hin eine Anzahl von stabilen Positionen einnehmen kann, welche einen Winkelabstand voneinander haben.

7. Vorrichtung nach Patentanspruch 6, **dadurch gekennzeichnet**, dass sie wenigstens einen Zapfen (21) enthält, der in wenigstens einen, nach oben zeigenden U-förmigen Kanal (22) einsetzbar ist, wobei letzterer ein offenes Ende (26) aufweist, durch welches der Zapfen (21) eingesetzt und freigegeben werden kann, und wobei er ebenfalls ein entgegengesetztes blindes Ende (27) aufweist, gegen welches der Zapfen (21) anschlägt, und zwar durch die Wirkung eines elastischen Elementes (23), das in axialer Richtung zwischen der Basis (4) und dem Kernkörper (6) arbeitet, so dass das Einrasten und die Freigabe des Kernkörpers (6) durch einen axial gerichteten und dem elastischen Element (23) entgegenwirkenden Druck und eine anschliessende leichte Umdrehung des Kernkörpers (6) selbst erhalten werden.

8. Vorrichtung nach Patentanspruch 7, **dadurch gekennzeichnet**, dass sie eine Anzahl der genannten Kanäle (22) enthält, welche umlaufend angeordnet sind.

9. Vorrichtung nach einem beliebigen der vorstehenden Patentansprüche, **dadurch gekennzeichnet**, dass jeder Auslaßstutzen (15) einer Leitung (20) zuzuordnen ist, welche wenigstens eine Auslassbohrung (25) zum Ablassen eines Druckluftstrahls hat, der in ein entsprechendes Filterelement (2) gerichtet werden kann.

10. Vorrichtung nach Patentanspruch 9, **dadurch gekennzeichnet**, dass die genannte Leitung (20) eine Anzahl von zueinander ausgerichteten Auslassbohrungen (25) aufweist, von denen jede einem Filterelement (2) zugeordnet werden kann.

## Revendications

1. Un dispositif pour la purification de filtre à air comprimé, comprenant:
- une base (4) fixée à une structure externe (3):
- une pluralité de connexions de sortie (15) destinées, pendant le fonctionnement du dispositif, à être reliées à une pluralité d'éléments filtrants (2) devant être nettoyés:
- au moins une connexion d'entrée (14) destinée à être reliée à une source d'air comprimé;
caractérisé en ce qu'il comprend un noyau (6), accouplé à la base (4), pourvu d'une paroi latérale annulaire (8) descrivant partiellement une cavité interne (13) et sur laquelle est formée une pluralité de connexions de sortie (15), lesquelles connexions (15) sont disposées radialement dans des positions angulaires déterminées; ladite connexion d'entrée (14) menant à ladite cavité interne.

2. Un dispositif selon la revendication 1, caractérisé en ce que des orifices (9) sont formés dans ladite paroi latérale (8) et à chacun desquels une connexion de sortie (15) recpective peut être associée.

3. Un dispositif selon la revendication 1 ou 2, caractérisé en ce que le noyau (6) est réalisé en deux parties, respectivement une première partie (7) et une seconde partie (10), lesquelles parties peuvent être assemblées entre elles; l'une des deux parties présente ladite paroi latérale (8).

4. Un dispositif selon la revendication 3, caractérisé en ce que chaque connexion de sortie (15) est coaxiale à un orifice respectif (9) et est maintenue entre la première et la seconde partie (7, 10) du noyau (6).

5. Un dispositif selon la revendication 4, caractérisé en ce que chaque connexion de sortie (15) comprend un manchon (17) présentant une base en forme de flange (24) qui s'engage dans une dépression (18) d'une première partie (7) du noyau (6) et qui s'engage également dans une dépression (19) d'une seconde partie (10) du noyau (6).

6. Un dispositif selon n'importe laquelle des revendications précédentes, caractérisé en ce que le noyau (6) est accouplé à la base (4) de manière à ce que ledit noyau (6) puisse translater axialement et pivoter par rapport à ladite base (4) et puisse, sur commande, assumer sélectivement une pluralité de positions stables angulairement distancées l'une de l'autre.

7. Un dispositif selon la revendication 6, caractérisé en ce qu'il comprend au moins un goujon (21) engageable dans au moins un canal (22) en fome de U retourné ayant une extrémité ouverte (26) au travers de laquelle le goujon (21) peut être inséré et désinséré, et ayant également une extrémité opposée aveugle contre laquelle le goujon (21) bute sous l'effet d'un élément élastique (23) opérant dans une direction axiale entre la base (4) et le noyau (6), de manière à ce que l'engagement et le désengagement du noyau (6) soit réalisé au moyen d'une pression dirigée axialement opposée à l'action de l'élément élastique (23) et d'une successive légère rotation du noyau (6).

8. Un dispositif selon la revendication 7, caractérisé en ce qu'il comprend une pluralité de canaux (22) disposés circonférentiellement.

9. Un dispositif selon n'importe laquelle desdites revendications précédentes, caractérisé en ce que chaque connexion de sortie (15) est associable à un conduit (20) ayant au moins un orifice de sortie (25) pour l'émission d'un jet d'air comprimé pouvant être dirigé dans un respectif élément filtrant (2).

10. Un dispositif selon la revendication 9, caractérisé en ce que ledit conduit (20) présente une pluralité d'orifices de sortie (25) alignés, chacun desquels est associable à un élément filtrant (2).
